# EUROPEAN PATENT SPECIFICATION

(11) **EP 3 311 058 B1**
(45) Date of publication and mention of the grant of the patent: **08.04.2020**
(21) Application number: 16810626.8
(22) Date of filing: 16.06.2016
(51) Int. Cl.: F16L 25/12, F16L 27/10, F16L 47/06, F16L 47/18, F16L 49/08

(54) **PIPE FITTING**
ROHRVERSCHRAUBUNG
RACCORD DE TUYAU

(30) Priority: 17.06.2015 AU 2015902312
(43) Date of publication of application: 25.04.2018
(73) Proprietor: Hawthorne Holdings Pty Ltd, Moffat Beach, Queensland 4551 (AU)
(72) Inventor: HOBBS, Andrew, Scarborough Queensland 4020 (AU)
(74) Representative: Dummett Copp LLP
(86) International application number: PCT/AU2016/050506
(87) International publication number: WO 2016/201514

(56) References cited:
- WO-A1-2015/011555
- GB-A- 867 346
- GB-A- 1 194 496
- NL-A- 8 103 793
- US-A- 5 320 326
- US-A- 5 437 479
- US-A1- 2009 039 647

## Description

### FIELD

This disclosure relates to a pipe fitting. This disclosure also extends to a pipe assembly including the pipe fitting. Further disclosed is a method of manufacturing a pipe fitting.

This disclosure relates particularly but not exclusively to a pipe fitting for use in a pipe assembly for conveying a fluid. In a particular exemplary application the pipe fitting may be used as part of a plumbing system for draining waste water from a building. It will therefore be convenient to hereinafter describe the disclosure with reference to this example application. However at the same time it must be recognized that the disclosure is capable of broader application. For example the pipe fitting could be used on all suitable types of pipes or conduits. It is not limited to pipe fittings used on waste or drainage pipes of domestic plumbing assemblies. Further it is not limited to use on plumbing pipes forming part of a plumbing assembly. For example, the pipe fitting may be used as part of a conduit system for electrical and communications systems.

### DEFINITION

In the present specification and claims the term "comprising" shall be understood to have a broad meaning similar to the term "including" and will be understood to imply the inclusion of a stated integer or step or group of integers or steps but not the exclusion of any other integer or step or group of integers or steps. This definition also applies to variations on the term "comprising" such as "comprise" and "comprises".

In the present specification and claims, the term "pipe" shall be understood to have a broad meaning and is not limited for use as a conveyance of fluid. The term "pipe" also includes conduit such as that used for electrical and communications systems.

### BACKGROUND TO THE DISCLOSURE

Underground pipes such as drainage pipes and underground conduits such as electrical conduits may be subject to numerous stresses during their lifetime as a result of ground conditions such as heaving clays in which the ground is prone to heaving and other movements, the pipe may be buried beneath a heavy traffic area, freezing and thawing of the ground and other ground movement such as caused by earth tremors and the like.

The external forces imposed on underground pipes may urge the pipes to move relative to each other from their initially installed positions in which they are aligned. In the absence of a mechanism for these forces to be relieved, e.g. by movement of the pipes, continuous stresses will be applied to the pipes and the pipe joints coupling the pipes to each other. The stresses on the pipes may lead to cracking and breakage of the pipes and the pipe joints. This may result in the leakage of liquid, e.g. fluid egress from the pipe and/or the entry of external matter, e.g. unwanted infiltration from the outside into the pipe. Consequently when such a breakage is detected the damaged pipes need to be repaired. Due to the fact that the pipe is received within the ground, e.g. 1-2m below the ground surface and the damaged pipe is not visible from the surface the excavation of the surrounding earth and the repair of the pipe can be a difficult and arduous process.

One way in which this problem has been mitigated at least to some extent is to install a swivel joint inline with the pipes that permits angular movement of the pipes relative to each other. However a pivoting or a swivelling of a swivel joint may be restricted by a pipe installation if the pipes are not able to compensate for longitudinal extension or retraction of the pipes. Pipe fittings or that allow for telescopic expansion have therefore also been proposed.

These expansion and swivel joints are generally used with drainage systems in reactive soils or unstable ground. Reactive soils have a high clay content and swell on wetting and shrink on drying. Ground that has been filled such as a reclaimed quarry or swimming pool may also be unstable. Instability may also be naturally occurring for example in granular soils such as sand or gravel, ground movement often results from a condition in which there are too many voids between particles. Such circumstances dictate that some sort of pipe joint that can accommodate pipe movement be used.

However, swivel and expansion pipe joints are relatively expensive compared to conventional pipe joints. For this reason, they are not used for less reactive soils and ground that is considered sufficiently stable. In such circumstances there is considered to be a cost trade off between using conventional fittings and the expense of digging the pipe up and repairing the pipe at a later stage.

Flexible pipes and pipe fittings that are corrugated are known. However, the corrugations are considered undesirable for use to transfer liquids as the interior surface corrugations can trap sediment and interfere with a smooth flow of fluid through the pipe.

It will also be appreciated that the disclosed pipe fittings may have above ground applications in which there is a risk of relative movement between pipes. Vertical drain stacks and discharge pipe in multi story buildings often use conventional expansion and swivel joints where fixtures or branch lines are connected.

It will be appreciated that the disclosed pipe fittings may be used in any desirable application where there is a risk of relative movement between the pipes or conduits that are connected to the pipe fitting.

Clearly it would be advantageous if an alternative contrivance could be devised for coupling conduits, in particular drainage pipes, in flow communication with each other in such a way as to relieve at least some of the stresses imposed on the pipes and pipe joints.

WO 2015/011555 discloses a connector having a spring configured to change a dimension such as diameter or length in response to a change in a force applied to it. The spring is biased in a radial or longitudinal direction towards a natural dimension. The connector includes a dimension control portion configured to restrict the change in dimension away from the bias of the spring.

### SUMMARY OF THE DISCLOSURE

The invention is defined in the independent claims. Preferred features are specified in the dependent claims.

The invention consists in a pipe fitting for coupling pipes together, the pipe fitting having a body.

The pipe fitting body has at least two open ends that are substantially cylindrical and rigid. By substantially rigid, it is meant that the open ends do not significantly deform and/or bend under stress, although some degree of flex may be tolerated.

The pipe fitting body may be in any suitable format for joining or coupling pipes or conduits together including elbows and couplings (two open ends), T joints and Y joints (three open ends) and X joints (4 open ends).

The pipe fitting body has a section between the openings that has a spring configuration. The spring section enables the pipe fitting to tolerate stresses that may include expansion, compression, rotation/or and bending, that would damage a conventional pipe fitting.

The term "spring configuration" includes any type of configuration having at least one slot and at least one spring member that may exhibit the properties of a spring. The spring configuration is non-helical. Non-helical spring configurations have two or more cylindrical spring members that are interconnected.

As is known in the spring arts, the slot and spring member dimensions and number thereof may be selected to provide desired physical properties such as flexure and spring. Suitably the spring section may comprise between 2 to 6 cylindrical spring members, each separated by a slot.

Suitably the spring configuration is integrally formed in the pipe fitting body during injection moulding of the pipe fitting body.

Alternatively, the pipe fitting body may be injection moulded as per conventional pipe fittings and the pipe fitting body is machined in a separate step to produce the spring configuration. In this way a customised pipe fitting may be produced for specific applications.

The pipe fitting also includes an elastomeric sleeve that surrounds the spring section and which seals the slots. The elastomeric properties of the sleeve allow for the sleeve to flex with the spring section in response to stress.

Suitably the sleeve is over moulded onto the thermoplastic body such that the elastomer not only seals the slots but fills the slots. This provides a desirable smooth inner surface to the pipe fitting. Overmoulding an elastomer onto a rigid thermoplastic is well known in the moulding arts.

Suitably, the thermoplastic material for the body has a similar or same chemical composition as the elastomeric sleeve. This provides a degree of compatibility between the body and sleeve and resist delamination.

An especially preferred elastomeric material is a styrene butadiene rubber. In this case, a preferred thermoplastics material for the body is ABS. As both materials include styrene, there is a degree of compatibility between the materials that may resist delamination.

Suitably, the disclosed spring section can respond to a bending force by bending at an angle of up to about 15º, suitably up to about 10º, suitably up to 5º. A conventional pipe fitting would clearly crack or fracture, or even catastrophically fail if bent to such an angle.

The invention also includes a method of manufacturing the pipe fitting comprising the steps of injection moulding the body of the fitting in a first moulding step followed by a second step of overmoulding the elastomeric sleeve onto the body.

The pipe fitting as disclosed herein may be used in any suitable pipe or conduit system. Where the pipe fitting is to be used in a waste water drainage system, he pipe fitting may be joined to drainage pipes by conventional techniques such as solvent welding.

The pipe fittings as disclosed herein may also be used in the repair of cracked pipes and pipe fittings. A section of pipe that has been damaged can be cut out and replaced by a pipe fitting as disclosed herein. The pipe fitting by virtue of the spring section can tolerate misalignment caused by any earth movement and may protect the pipe from further damage in that area.

A damaged conventional pipe fitting may also be replaced by a pipe fitting as disclosed herein.

### DETAILED DESCRIPTION

A pipe fitting and a pipe assembly in accordance with this disclosure may manifest itself in a variety of forms. It will be convenient to hereinafter describe several embodiments of the invention in detail with reference to the accompanying drawings. The purpose of providing this detailed description is to instruct persons having an interest in the subject matter of the invention how to carry the invention into practical effect. However it is to be clearly understood that the specific nature of this detailed description does not supersede the generality of the preceding broad description. In the drawings:
Figure 1 is a perspective view of one aspect of the disclosed body of a pipe fitting that is in the form of an elbow joint;
Figure 2 is a perspective view a pipe fitting that has the body as shown in Figure 1;
Figure 3 is a perspective view of another aspect of the disclosed body of a pipe fitting that is in the form of a T junction;
Figure 4 is a perspective view of another one aspect of the disclosed body of a pipe fitting that is in the form of a Y junction;
Figure 5 is a perspective view of another one aspect of the disclosed body of a pipe fitting that is in the form of an elbow joint;
Figure 6 is a perspective view of one aspect of the disclosed pipe fitting in the form of a coupling;
Figure 7 is a perspective view of the body of the pipe fitting as shown in Figure 6 without the sleeve;
Figure 8 is a perspective view of the sleeve of the pipe fitting as shown in Figure 6;
Figure 9 is a photograph showing a test set up for testing angular deformation of the coupling as shown in Figure 6;
Figure 10 is a view of the test rig shown in Figure 9 with the coupling bent at an angle;
Figure 11 is a close up view of the bent coupling;
Figure 12 is a close up of the coupling after bending in the test rig;
Figure 13 is an interior view of the coupling show in Figure 12;
Figure 14 is a view of a further test ring for testing rotational deformation of the coupling as shown in Figure 15 is a detail of the coupling in the test rig shown in Figure 15 rotated at 90º;
Figure 16 is an interior view of the coupling after the rotation as shown in Figure 15;
Figure 17 shows a pipe assembly including the coupling as shown in Figure 8;
Figure 18 shows the pipe assembly as shown in Figure 17 subjected to a bending force;
Figure 19 shows a prior art pipe assembly with a Y fitting;
Figure 20 shows the pipe assembly shown in Figure 19 after being subjected to a bending force;
Figure 21 shows another prior art pipe assembly with a Y fitting;
Figure 22 shows the pipe assembly as shown in Figure 21 after catastrophic failure;
Figure 23 shows a pipe assembly including the coupling as shown in Figure 6 under a bending stress;
Figure 24 shows the pipe assembly shown in Figure 23 after the bending stress has been released;
Figure 25 shows a further pipe assembly including the coupling as shown in Figure 6 subject to a further deformation test;
Figure 26 shows the pipe assembly as shown in Figure 26 after the deformation shown in Figure 25;
Figure 27 shows the pipe assembly as shown in Figure 25 subjected to further deformation; and
Figure 28 shows the pipe assembly shown in Figure 28 being deformed to the maximum amount.

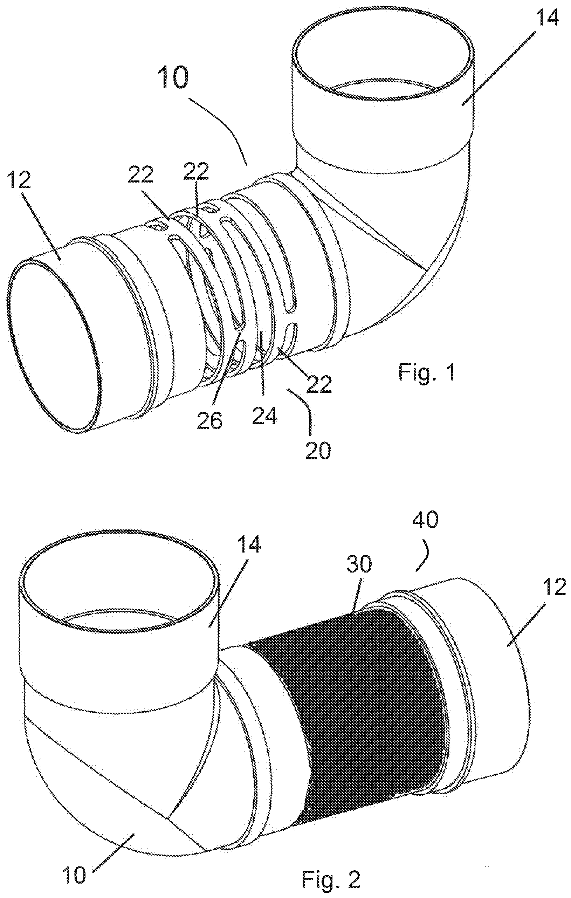

In Fig 1 reference numeral 10 refers generally to the body of an elbow pipe fitting in accordance with the invention. The fitting body 10 is injection moulded ABS. The fitting body 10 has two cylindrical ends, one having a male connection 12 and the other a female connection 14 for connection to complimentary ends of pipes.

The fitting body 10 has a spring section 20 with a non-helical spring configuration. The spring section has three cylindrical spring members 22 with slots 24 in between. Each alternate spring member 22 is connected by lands 26 that are disposed 90 degrees apart so as to maintain the integrity of the spring section.

The thickness of each spring member 22 and wall thickness thereof determine the stiffness and stress level of each spring member 22. The number of slots 24 and number of spring members 22 may determine the spring stiffness.

Figure 2 shows the complete elbow fitting 40 in which the fitting body 10 has a sleeve 30 of ABS elastomer overmoulded thereon. The sleeve 30 covers and fills slots 22 so as to provide water impermeability and a smooth inner surface. This contributes to a laminar flow.

The butadiene styrene elastomer of the sleeve is compatible with the ABS body so as to resist delamination.

The elastomeric nature of the sleeve 30 allows the sleeve 30 to bend, compress or expand when the fitting is subject to stress. The elastomeric nature of the sleeve 30 also contributes to the stiffness of the spring. Further the spring members 22 act as reinforcement for the sleeve 30. This has a distinct advantage over known types of flexible pipe joints that are simply rubber cylinders that are connected to pipes by hose clips. In practice these rubber joints clips are not considered to be strong enough for underground use as they are subject to compression under the weight of the ground that may block or interfere with water flow.

The synergistic combination of the sleeve and spring members may provide considerable resistance to compression, expansion, rotational and bending forces.

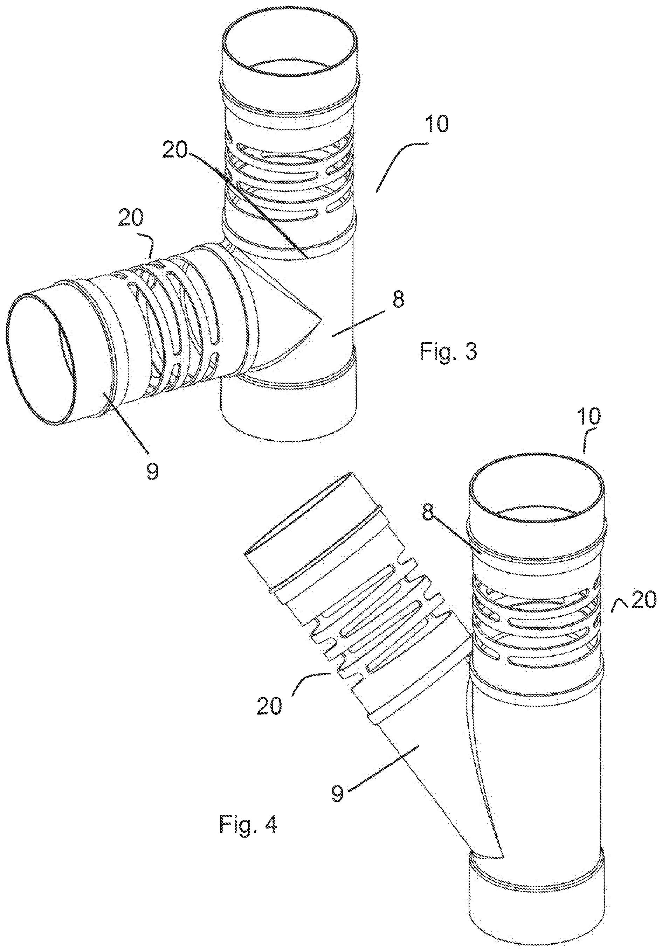

Figures 3 and 4 show T and Y fitting bodies 10 in which each arm 8,9 of the joint has a spring section 20.

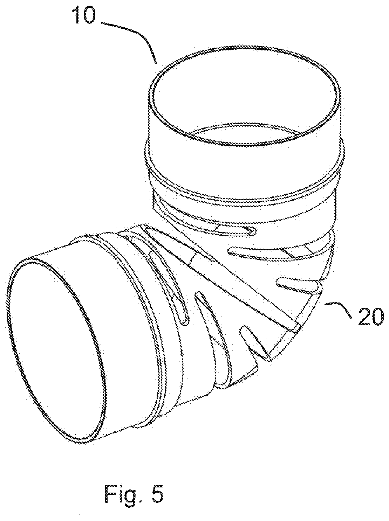

Figure 5 shows an alternate elbow fitting body 10 in which the spring section 20 is in the curve of the elbow.

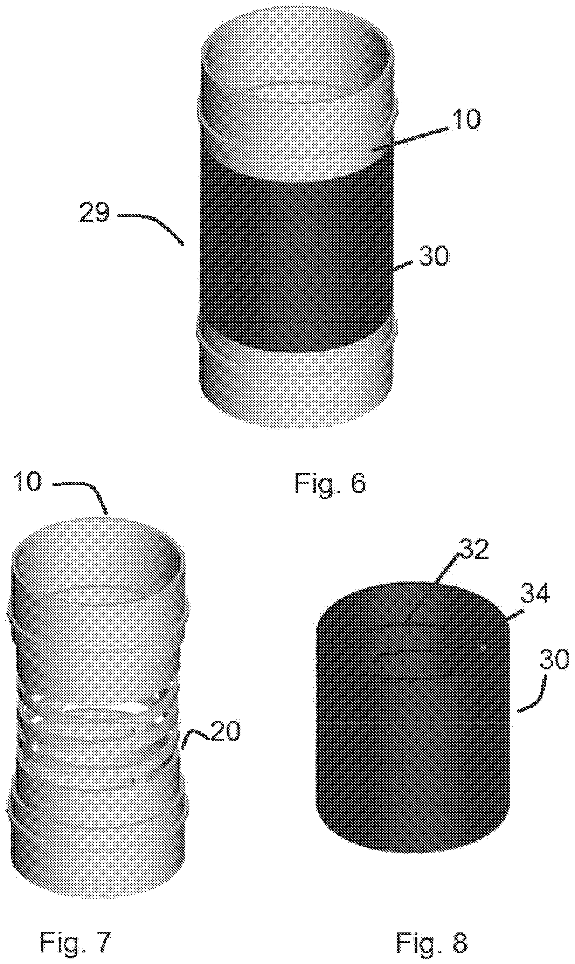

Figure 6 shows a still further pipe fitting 29 in the form of a straight coupling body with a sleeve 30 overmoulded thereon.

Figure 7 shows the body of the pipe fitting as shown in Figure 6.

Figure 8 is a schematic view of the over moulded sleeve 30. In this view the inner wall of the overmoulding may be seen to have grooves 32 and lands 34 that are complimentary to the spring member 22 and slots 24 in the spring section 20.

### Product Testing

### Trial 1

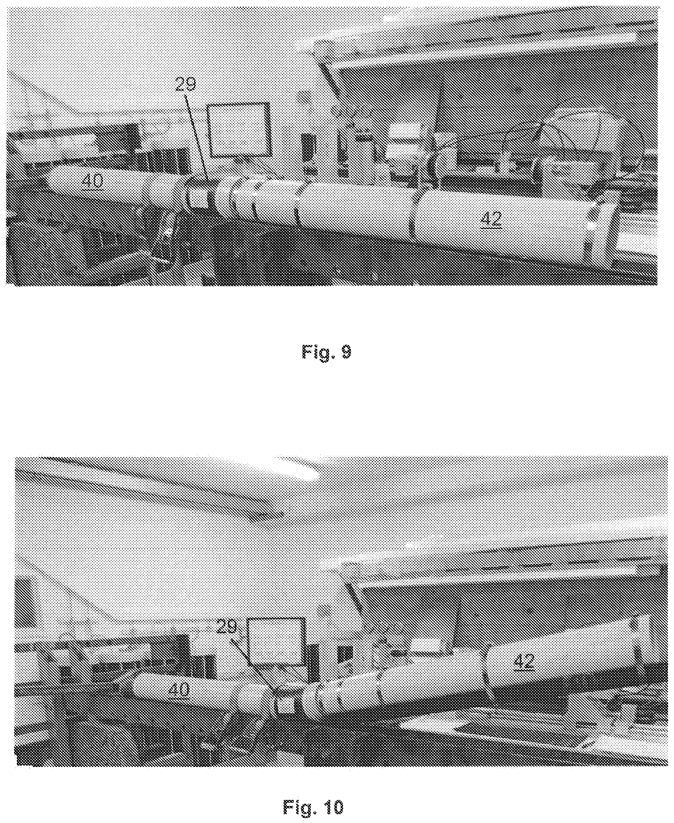

A straight 100 mm coupling 29 as shown in Figure 6 was provided. The coupling 29 was glued at each end to a 100 mm diameter pipe 40, 42 as per conventional techniques. The coupled pipes were attached to a test rig as shown in Figure 9. The test rig is able to selectively raise pipe 42 about a bend axis A corresponding to the location of coupling 29.

The test was conducted in two parts. In the first part the aim was to progressively deflect pipe 42 relative to pipe 40 about coupling 29 whilst passing a 98 mm sphere through the coupling until the maximum angle was reached at which the sphere would still pass through.

The maximum angle at which the sphere would pass through the coupling 29 was 12.9º. The coupling deflected at this angle is shown in Figure 10.

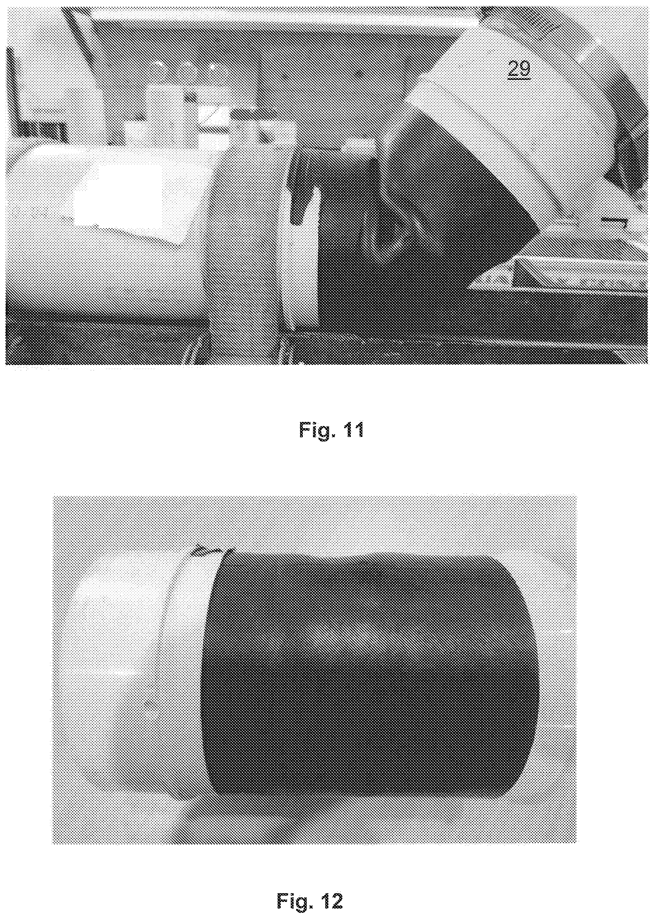

In the second part of the trial, deflection was continued in an attempt to determine the angle at which the coupling 29 failed. The maximum deflection angle of the test rig is 52.5º. The coupling 29 was deflected to this maximum angle as shown in Figure 11. The coupling 29 did not fail.

The test rig was returned to the original position. The coupling 29 was removed from the pipes 40, 42 and examined. Figure 12 shows that although there is some deformation it was not fractured nor broken.

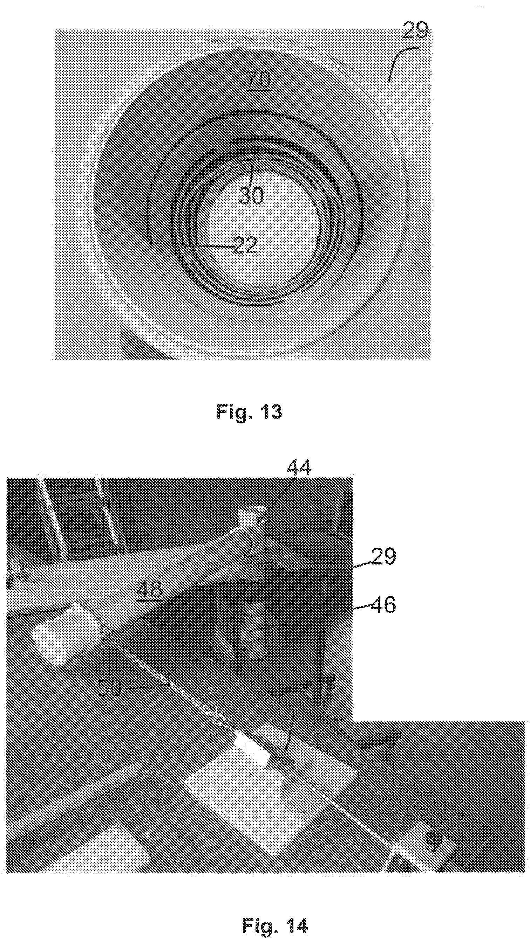

Figure 13 shows the interior of the coupling 30 after maximum deformation showing that one spring member 22 was deformed and had delaminated from the sleeve 30.

### Trial 2

The test set up is shown in Figure 14. In this trial a coupling 29 was subjected to a rotational force. The coupling 29 having a 100 mm diameter was connected at each end to a respective 100 mm diameter T fitting 44, 46 by gluing as per conventional techniques in a vertical orientation. The upper T fitting 44 was in turn further connected to a 100 mm diameter pipe 48.

The lower T fitting 46 was fixed against rotational force and the upper pipe 48 was fixed to a chain 50 one meter from the coupling 29 for measured application of a rotational force.

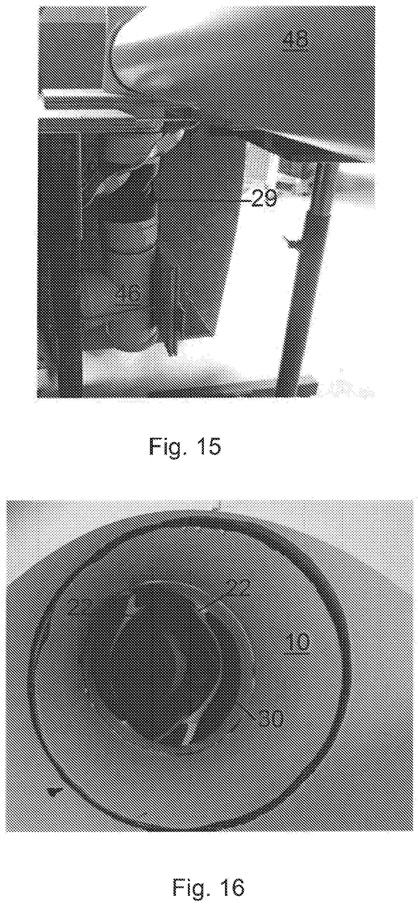

The test was conducted in three parts, the first two parts were in a similar manner to trial 1. In the first part of the trial, a rotational force was applied whilst passing a 98 mm diameter sphere through the coupling 29. The maximum angle of rotation at which the sphere could pass though the coupling 29 was 13.2º with an applied force of 11.0 kg. This is the angle of rotation as shown in Figure 15.

The coupling 29 was then subjected to further rotational force to determine at which angle the coupling 29 would fail. The coupling 29 was subject to rotation to an angle of 90º, which was the maximum angle of the test rig.

Figure 15 shows that at 90º, the coupling 29 is deformed but has not ruptured or otherwise failed. It was observed that with a force of 29.0 kg and a rotational angle of 89º, two internal spring members 22 broke, as shown in figure 16. However, there was no delamination of the sleeve 30 from the coupling body 10.

The rotational force was released and the coupling resumed its original position and showed some deformation. The coupling was removed from the pipe 48 and subjected to a pressure test of 30 kPa for 5 minutes. No leakage was observed.

### Trial 3

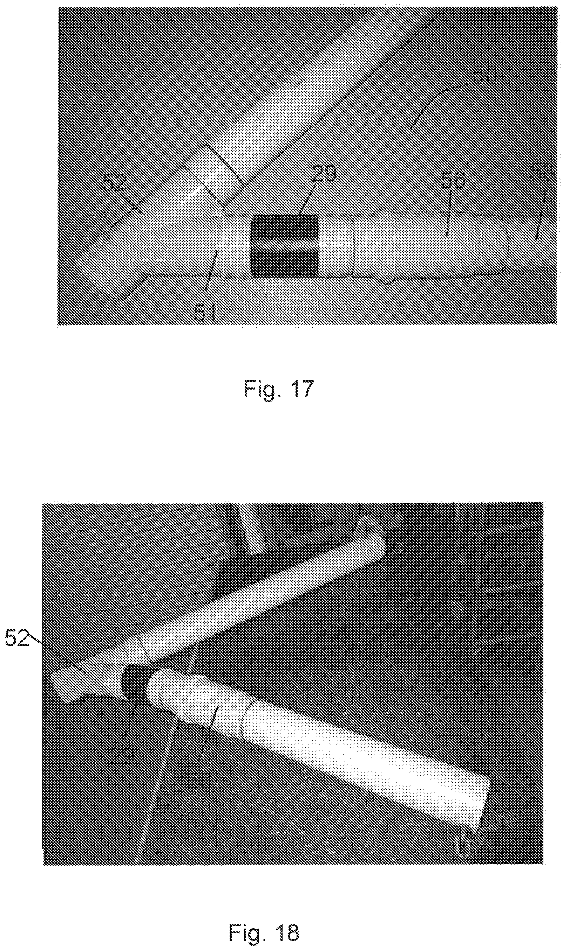

Figure 17 shows a 100 mm diameter pipe assembly 50 including a 45º Y fitting 52. A pipe 52 is glued to the vertical inlet of Y fitting 52 as per conventional DWV (Drain Waste Vent) techniques. The angled inlet 51 of the Y is fitted to a coupling 29 of the same type as used in Trials 1 and 2. The other end of the coupling 29 is coupled to an expansion joint 56 which in turn is coupled to a pipe 58. Expansion joints 56 have telescopic members that are used to accommodate laterally moving soil.

Figure 18 shows the test rig set up in which the fitting 52 was subjected to a bending force of 14.4 kg at an angle of 60º, which was maintained for a period of 25 hours. After this period, the force was removed with no damage at all noted on the Y fitting 52, coupling 29 or expansion joint 56.

### Trial 4

### Part A

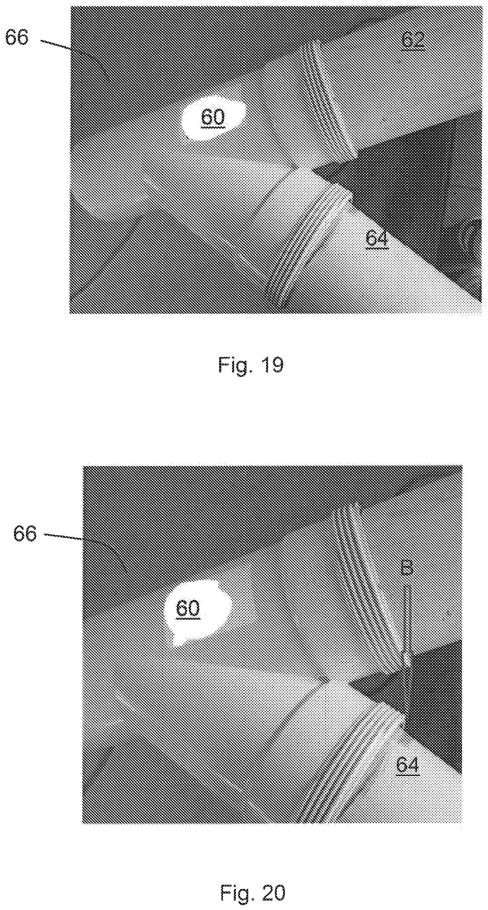

A pipe assembly 66 was formed by joining a 100 mm diameter 45º Y fitting 60 as shown in Figure 19 with two female upper ends to two pipes 62, 64 by conventional gluing. The glue had a 24 hour drying time.

The pipe assembly 66 was placed into a test rig as shown in Figure 18. Each piece of pipe 62, 64 had a pipe stiffener inserted therein so as to transfer the force directly to the fitting 60. A force was applied to pipe 64 one meter from the fitting with pipe 62 fixed 1 meter from the fitting.

With a force of 88.0 kg the pipe assembly had deformed to an angle of 53º, at which point the glue failed as shown by arrow B in figure 20.

### Part B

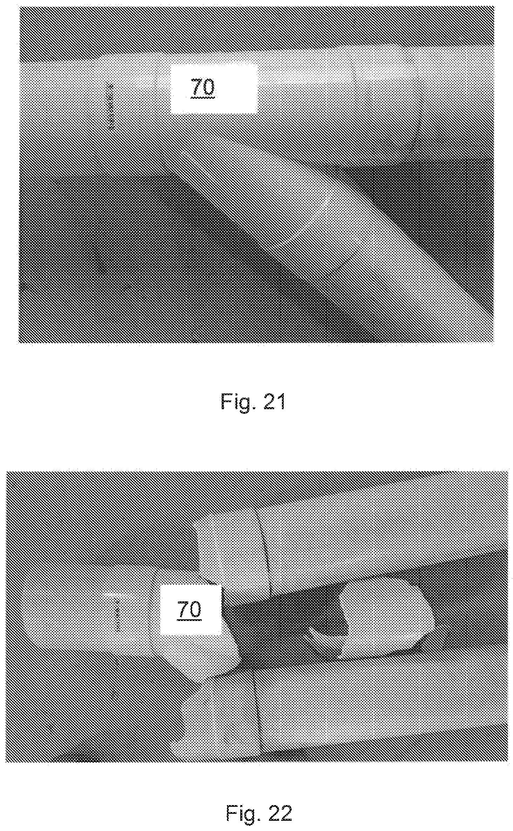

The trial as described in Part A was repeated with another 45º Y fitting 70 as shown in Figure 21. With a force of 112.0 kg the Y fitting 70 exhibited catastrophic failure at an angle of 58º as shown in figure 22. There was no damage to the pipe.

### Part C

The trial as described in Part B was repeated except that coupling 29 was inserted between the 45º arm Y fitting and the pipe 74. In this case, however, the use of a pipe stiffener was not necessary as a load of only 13 kg was required to produce an angle of 59.37º.

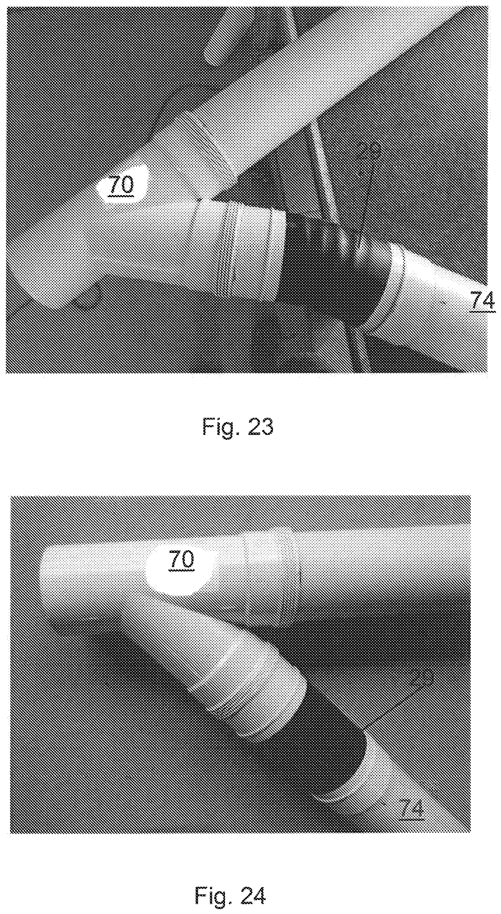

With a force of 13.0 kg, an angle of 60º was produced as shown in figure 23. This angle was maintained for a period of 55 hours with no damage to the Y fitting 70, the pipes or the coupling. The load was removed and in 30 minutes the coupling 30 had returned to an angle of 51.5º with no damage as shown in Figure 24.

### Trial 5

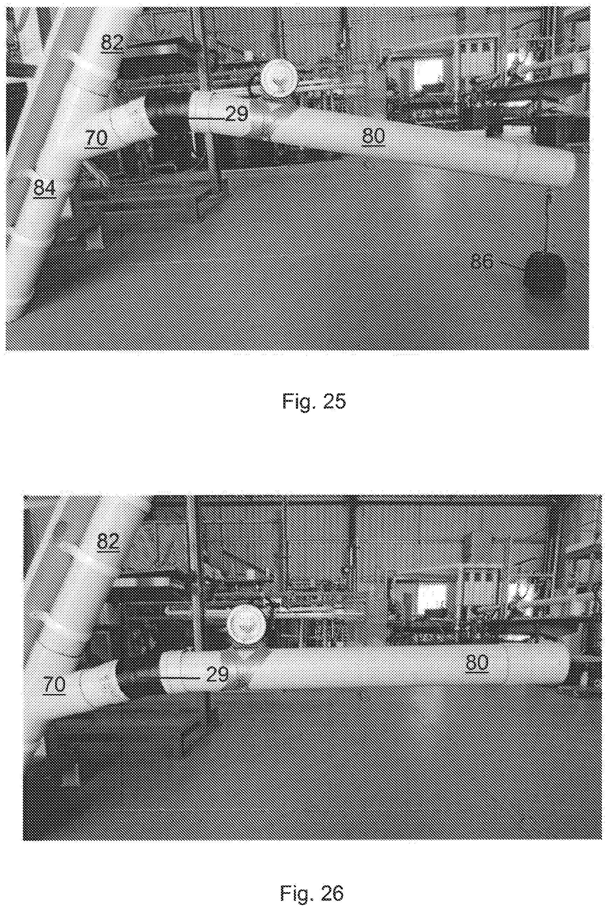

A coupling 29 was fitted to the arm of a Y fitting 70 as previously described and pipes 80, 82, 84 were fitted to the Y fitting and coupling 29 as shown in Figure 25. Weights 86 were fitted to the end of pipe 80 that caused the coupling 29 to deform at an angle of about 30º.

When the weights 86 were removed, the coupling 29 returned to almost the original position as shown in figure 26.

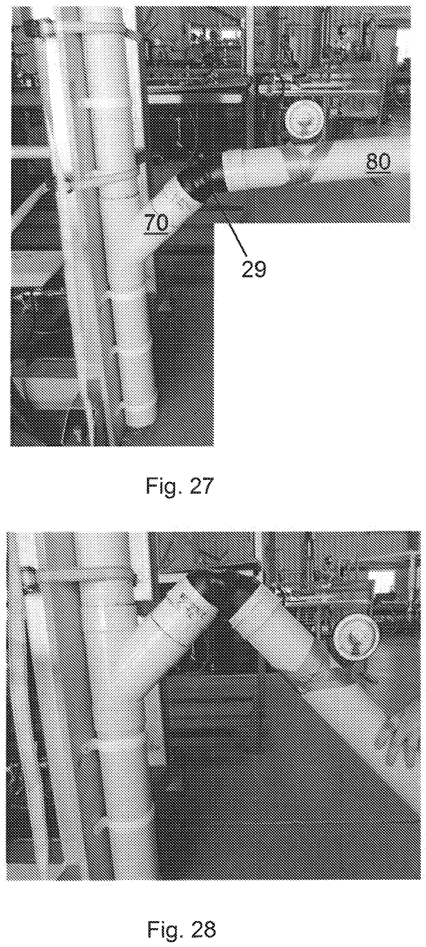

Figures 27 and 28 show the coupling 29 subjected to even further deformation.

These above test results clearly show that the pipe fittings as disclosed herein may deform to a considerable degree without failure. The pipe fittings resist both angular and rotational deformation. The test rigs that were used in the above trials were designed to test conventional thermoplastic pipe fittings to failure. However, no test rig was able to cause the coupling 29 to delaminate or leak. This clearly shows the trial results for the disclosed coupling are indeed unexpected and surprising.

### Trial 6

The coupling was subjected to a cyclic testing plastic telescopic waste connectors according to Australian standard AS2888.11. This test provides a method of subjecting the expansion joint of a plastics telescopic bath waste connector to cyclic movements consistent with the temperature-induced expansion and contraction experienced by such fittings in service.

Prior to testing, coupling 29 was conditioned for 24 hours at 20 degrees C. After conditioning, the coupling 29 was subjected to a hydrostatic pressure tests at 350 kPa for 65 seconds. There were no leaks.

The coupling 29 was placed in a test rig and subjected to 5000 cycles of up to 15mm movement at a cycle time of 6 seconds.

The coupling 29 was subject to another hydrostatic pressure tests at 350 kPa for 65 second. No leaks were observed.

The results for trial 6 show that the coupling can also resist expansion and contraction in a manner that not only meets but exceeds the standard for telescopic fittings. Thus the disclosed pipe fittings may be used in place of telescopic fittings. Additional, the pipe fitting as disclosed can also resist bending and rotational forces that a conventional telescopic fitting cannot.

Although the pipe fittings that were tested had a 100 mm diameter, it will be appreciated that the pipe fittings as disclosed herein may be manufactured for coupling to pipes of any other size, suitably up to and including pipes having diameter of 375 mm.

It will therefore be appreciated that the pipe fittings as disclosed herein can provide considerable advantages over known fittings. The disclosed fittings have no moving parts as compared to the known expansion and swivel joints and are more cost effective to produce. The fittings may therefore be economically employed on a much wider range of projects than conventional swivel and telescopic joints. They may be used in underground pipe systems where there is some risk of ground movement, in areas where the ground may freeze and in areas where there is a real risk of ground movement due to earth tremors. Other suitable uses include under heavy traffic areas.

The forces generated by such ground movement are generally transmitted along the length of a pipe to the points at which the pipes are connected to a fitting or other pipe. Failure therefore generally occurs at the pipe fittings. It will be appreciated that by using the fittings as described herein to connect pipes, that these forces may be absorbed without causing cracking or splitting of the pipes or any rigid fittings associated therewith.

The pipe fittings may also be used to repair or replace broken or cracked pipes.

The pipe fittings may easily be installed and connected to pipes using conventional solvent welding techniques.

The pipe fittings are especially advantageous for drain waste systems. These systems operate at low pressure and rely on gravity to move fluids (and often entrained solids). It is therefore desirable to use fittings that are as smooth as possible on their interior surfaces. Any sharp interior ridges or corrugations may catch debris or accumulate buildup of material and cause clogging. The absence of interior snags also makes it much easier to "snake out" or "rod out" a clogged pipe using long flexible tools made for this purpose.

It may also be appreciated that the complimentary surface of the sleeve 30 with respect to the coupling body provides such a desirable smooth uninterrupted inner surface to the fitting. This offers a significant advantage over known corrugated flexible fittings.

It will of course be realized that the above has been given only by way of illustrative example of the invention. Other modifications and variations thereto, as would be apparent to persons skilled in the art, may fall within the scope of the invention, which is defined in the following claims.

## Claims

1. A pipe fitting (40) for coupling pipes together, the pipe fitting (40) having a body (10) with at least two substantially cylindrical rigid open ends (12, 14), each end for joining to an end of a pipe, a spring section (20) intermediate two of the at least two substantially rigid open ends that has a spring configuration defined by at least one slot (24) and at least one spring member (22); and a sleeve (30) surrounding the spring section (20), the sleeve (30) being formed from an elastomeric material that fluidly seals the slot(s) in the spring section (20), **characterized in that** the spring configuration is non-helical.

2. The pipe fitting of claim 1 in the form of an elbow, a coupling, a, T joint, a Y joint or an X joint.

3. The pipe fitting (40) of claim 1 or claim 2, wherein the spring configuration includes at least two interconnected cylindrical spring members (22).

4. The pipe fitting (40) of any one of claims 1 to 3, wherein the body (10) is injection moulded from a thermoplastics material.

5. The pipe fitting (40) of claim 4, wherein the thermoplastics material is selected from polyethylene -PE-, polyvinyl chloride -PVC-, polypropylene -PP-or acrylonitrile butadiene styrene -ABS-.

6. The pipe fitting (40) of claim 5, wherein the spring configuration is integrally formed with the body (10) during the injection moulding.

7. The pipe fitting (40) of claim 6, wherein the sleeve (30) is over moulded onto the body (10).

8. The pipe fitting (40) of any one of claims 1 to 7, wherein the pipe fitting (40) can respond to a bending force by bending at an angle of up to about 10°, suitably up to about 5°.

9. A method of manufacturing the pipe fitting (40) of claim 1 comprising the steps of injection moulding the body (10) of the fitting from a thermoplastics material in a first moulding step and a second step of overmoulding the elastomeric material onto the body to form the sleeve (30).

10. The method of claim 9, wherein, wherein the thermoplastics material is selected from polyethylene -PE-, polyvinyl chloride -PVC- or acrylonitrile butadiene styrene -ABS-.

11. The method of claim 9 or claim 10, wherein the elastomeric material is a butadiene styrene rubber.

12. The method of claim 11, wherein the thermoplastics material is ABS.

13. A pipe system comprising a pipe fitting (40) of any one of claims 1 to 8, with at least one pipe connected thereto.

## Patentansprüche

1. Rohranschlussstück (40) zum Verbinden von Rohren, wobei das Rohranschlussstück (40) folgendes aufweist: einen Körper (10) mit wenigstens zwei im Wesentlichen zylindrischen starren offenen Enden (12, 14), wobei jedes Ende zur Verbindung mit dem Ende eines Rohres dient, einen Federabschnitt (20), welcher zwischen den wenigstens zwei im Wesentlichen starren offenen Enden liegt und eine Federkonfiguration aufweist, die durch wenigstens einen Schlitz (24) und wenigstens ein Federelement (22) definiert ist; und eine Hülse (30), welche den Federabschnitt (20) umgibt, wobei die Hülse (30) aus einem Elastomermaterial ausgebildet ist, welches den Schlitz/die Schlitze im Federabschnitt (20) fluiddicht macht,
**dadurch gekennzeichnet,**
**dass** die Federkonfiguration nicht schraubenförmig ist.

2. Rohranschlussstück nach Anspruch 1
in Form eines Ellbogens, einer Kupplung, eines T-Stücks, eines Y-Verbinders oder eines X-Verbinders.

3. Rohranschlussstück (40) nach Anspruch 1 oder Anspruch 2,
bei welchem die Federkonfiguration wenigstens zwei miteinander verbundene zylindrische Federelemente (22) aufweist.

4. Rohranschlussstück (40) nach einem der Ansprüche 1 - 3, bei welchem der Körper (10) durch Spritzgießen aus einem thermoplastischen Material hergestellt ist.

5. Rohranschlussstück (40) nach Anspruch 4,
bei welchem das thermoplastische Material aus folgendem ausgewählt ist: Polyethylen -PE-, Polyvinylchlorid - PVC-, Polypropylen -PP- oder Acrylnitril-Butadien-Styrol -ABS-.

6. Rohranschlussstück (40) nach Anspruch 5,
bei welchem die Federkonfiguration integral mit dem Körper (10) während des Spritzgussprozesses ausgebildet ist.

7. Rohranschlussstück (40) nach Anspruch 6,
bei welchem die Hülse (30) auf den Körper (10) angeformt ist.

8. Rohranschlussstück (40) nach einem der Ansprüche 1 - 7, wobei das Rohranschlussstück (40) auf eine Biegekraft reagieren kann, indem es sich um einen Winkel von bis zu 10°, bevorzugt bis zu 5°, biegen lässt.

9. Verfahren zur Herstellung des Rohranschlussstücks (40) nach Anspruch 1, welches die folgenden Schritte umfasst:
Herstellen des Körpers (10) des Anschlussstücks durch Spritzgießen aus einem thermoplastischen Material in einem ersten Formschritt und einen zweiten Schritt, bei dem das Elastomermaterial an den Körper angeformt wird, um die Hülse (30) auszubilden.

10. Verfahren nach Anspruch 9,
bei welchem das thermoplastische Material aus folgendem ausgewählt ist: Polyethylen -PE-, Polyvinylchlorid -PVC- oder Acrylnitril-Butadien-Styrol -ABS-.

11. Verfahren nach Anspruch 9 oder Anspruch 10,
bei welchem das Elastomermaterial Butadien-Styrol-Gummi ist.

12. Verfahren nach Anspruch 11,
bei welchem das thermoplastische Material ABS ist.

13. Rohrsystem, umfassend ein Rohranschlussstück (40) nach einem der Ansprüche 1 - 8 und wenigstens ein damit verbundenes Rohr.

## Revendications

1. Raccord de tuyau (40) pour coupler des tuyaux ensemble, le raccord de tuyau (40) ayant un corps (10) avec au moins deux extrémités ouvertes rigides sensiblement cylindriques (12, 14), chaque extrémité étant destinée à être raccordée à une extrémité d'un tuyau, une section ressort (20) intermédiaire entre deux des au moins deux extrémités ouvertes sensiblement rigides qui a une configuration ressort définie par au moins une fente (24) et au moins un élément ressort (22) ; et un manchon (30) entourant la section ressort (20), le manchon (30) étant formé d'une matière élastomère qui scelle vis-à-vis des fluides la ou les fentes dans la section ressort (20), **caractérisé par le fait que** la configuration ressort est non hélicoïdale.

2. Raccord de tuyau selon la revendication 1, sous la forme d'un coude, d'un accouplement, d'un joint en T, d'un joint en Y ou d'un joint en X.

3. Raccord de tuyau (40) selon la revendication 1 ou la revendication 2, dans lequel la configuration ressort comprend au moins deux éléments ressorts cylindriques reliés l'un à l'autre (22).

4. Raccord de tuyau (40) selon l'une quelconque des revendications 1 à 3, dans lequel le corps (10) est moulé par injection à partir d'une matière thermoplastique.

5. Raccord de tuyau (40) selon la revendication 4, dans lequel la matière thermoplastique est choisie parmi le polyéthylène -PE-, le polychlorure de vinyle -PVC-, le polypropylène -PP- ou l'acrylonitrile butadiène styrène -ABS-.

6. Raccord de tuyau (40) selon la revendication 5, dans lequel la configuration ressort est formée d'un seul tenant avec le corps (10) durant le moulage par injection.

7. Raccord de tuyau (40) selon la revendication 6, dans lequel le manchon (30) est surmoulé sur le corps (10) .

8. Raccord de tuyau (40) selon l'une quelconque des revendications 1 à 7, le raccord de tuyau (40) pouvant répondre à une force de flexion en fléchissant à un angle allant jusqu'à environ 10°, de manière appropriée jusqu'à environ 5°.

9. Procédé de fabrication du raccord de tuyau (40) selon la revendication 1, comprenant les étapes de moulage par injection du corps (10) du raccord à partir d'une matière thermoplastique au cours d'une première étape de moulage et une seconde étape de surmoulage de la matière élastomère sur le corps pour former le manchon (30).

10. Procédé selon la revendication 9, dans lequel la matière thermoplastique est choisie parmi le polyéthylène -PE-, le polychlorure de vinyle -PVC- ou l'acrylonitrile butadiène styrène -ABS-.

11. Procédé selon la revendication 9 ou la revendication 10, dans lequel la matière élastomère est un caoutchouc butadiène-styrène.

12. Procédé selon la revendication 11, dans lequel la matière thermoplastique est l'ABS.

13. Système de tuyau comprenant un raccord de tuyau (40) selon l'une quelconque des revendications 1 à 8, avec au moins un tuyau relié à celui-ci.
